# EUROPÄISCHE PATENTANMELDUNG

(11) **EP 1 197 512 A1**
(43) Veröffentlichungstag der Anmeldung: **17.04.2002**
(21) Anmeldenummer: 01810889.4
(22) Anmeldetag: 14.09.2001
(51) Int. Cl.: C08J 3/14

(54) **Verfahren zur Bildung eines feinteiligen Polymerisats**

(30) Priorität: 13.10.2000 EP 00810945
(71) Anmelder: Sulzer Markets and Technology AG, 8401 Winterthur (CH)
(72) Erfinder: Vodermayer, Albert M., Dr., 8305 Dietlikon (CH); Kuhnert, Lothar, Dr., 12589 Berlin (DE)
(74) Vertreter: Sulzer Management AG

(57) **Zusammenfassung**

Das Verfahren zur Bildung eines feinteiligen Polymerisats in Form einer Dispersion (D) von Partikeln (50, 51), zwecks Herstellung von Pulverlacken oder Faserverbundwerkstoffen, umfasst zwei Stufen:
1) In einer ersten Stufe wird eine Lösung (S1) eines Polymers (P), das in einer ersten Flüssigkeit (L1) gelöst ist, in einer zweiten Flüssigkeit (L2) emulgiert. Das Polymer ist in der zweiten Flüssigkeit nicht lösbar. Die erste Flüssigkeit hat einen tieferen Siedepunkt als die zweite und sie ist in der zweiten nur beschränkt lösbar. Dank der beschränkten Löslichkeit bleibt das Polymer in den beim Emuglieren entstehenden Tröpfchen gelöst. Unter dem Einfluss von mechanischen Mitteln - insbesondere eines Hochgeschwindigkeitsrührwerks (31, 32) - und durch diese bewirkte Scherkräfte werden Tröpfchen erzeugt, deren mittlerer Durchmesser (d) einem der genannten Anwendungszwecke entspricht und vorzugsweise kleiner als 0,03 mm ist.
2) In einer zweiten Stufe wird unter Aufrechterhaltung der Emulsion (E) die erste Flüssigkeit destillativ aus dem Gemisch entfernt, so dass sich das Polymer in Form von Partikeln, insbesondere sphäroiden Polymerpartikeln verfestigt.

## Beschreibung

Die Erfindung betrifft ein Verfahren zur Bildung eines feinteiligen Polymerisats, ferner ein Feinpulver aus solchem feinteiligen Polymerisat sowie eine Verwendung des Feinpulvers.

Bei der Herstellung beispielsweise von Faserverbundwerkstoffen, insbesondere von unidirektional faserverstärkten Thermoplasten, oder von Pulverlacken werden Polymerpartikel benötigt, die feinteilig sind und die aus sogenannten Hochleistungspolymeren bestehen. Zur Erzeugung eines Feinpulvers, das aus einem feinteiligen Polymerisat besteht, sind drei Arten von Verfahren bekannt: 1. Mahlen, was sich besonders für kristalline Polymere (z.B. PPS oder PEEK) eignet. - 2. Dispersionspolymerisation oder Dispersionspolykondensation, bei denen ein Polymer in Form eines feinteiligen Pulvers anfällt (z.B. Polyamid). - 3. Nachträgliches Dispergieren von Polymerisaten, wobei Partikel mittels Versprühen, Umfällen oder Emulgieren oder auch Kombinationen solcher Verfahrensschritte erzeugt werden.

Aufgabe der Erfindung ist es, für das besondere Polymer Polyetherimid, das eine amorphe, d.h. nichtkristalline Form aufweist, oder ähnliche Polymere wie beispielsweise Polycarbonat, Polyamid-imid oder Polyethylenterephthalat ein Verfahren zu schaffen, bei dem ein feinteiliges Polymerisat entsteht, das für die Herstellung von Faserverbundwerkstoffen mittels Druckimprägnierung von aus Endlosfasern gebildeten Strängen geeignet ist. Diese Aufgabe wird durch das im Anspruch 1 definierte Verfahren gelöst.

Das Verfahren zur Bildung eines feinteiligen Polymerisats in Form einer Dispersion von Partikeln - zwecks Herstellung von Pulverlacken oder Faserverbundwerkstoffen - umfasst zwei Stufen:
1) In einer ersten Stufe wird eine Lösung eines Polymers, das in einer ersten Flüssigkeit gelöst ist, in einer zweiten Flüssigkeit emulgiert. Das Polymer ist in der zweiten Flüssigkeit nicht lösbar. Die erste Flüssigkeit hat einen tieferen Siedepunkt als die zweite und sie ist in der zweiten nur beschränkt lösbar. Dank der beschränkten Löslichkeit bleibt das Polymer in den beim Emuglieren entstehenden Tröpfchen gelöst. Unter dem Einfluss von mechanischen Mitteln - insbesondere eines Hochgeschwindigkeitsrührwerks - und durch diese bewirkte Scherkräfte werden Tröpfchen erzeugt, deren mittlerer Durchmesser einem der genannten Anwendungszwecke entspricht und vorzugsweise kleiner als 0,03 mm ist.
2) In einer zweiten Stufe wird unter Aufrechterhaltung der Emulsion die erste Flüssigkeit destillativ aus dem Gemisch entfernt, so dass sich das Polymer in Form von Partikeln, insbesondere sphäroiden Polymerpartikeln verfestigt.

Die abhängigen Ansprüche 2 bis 8 betreffen vorteilhafte Ausführungsformen des erfindungsgemässen Verfahrens. Gegenstand der Ansprüche 9 und 10 sind ein Feinpulver bzw. eine Verwendung einer Dispersion von feinteiligen Polymerpartikeln bei der Herstellung von Faserverbundwerkstoffen.

Nachfolgend wird die Erfindung anhand der Zeichnungen erläutert. Es zeigen:
- Fig. 1: ein Schema zur Erläuterung des erfindungsgemässen Verfahrens,
- Fig. 2: eine Zeichnung nach einer REM-Aufnahme, die eine Probe des mit dem erfindungsgemässen Verfahren gebildeten Produkts, nämlich feinteiliges Polyetherimid, darstellt und
- Fig. 3: eine Grössenverteilung der Polymerpartikel, welche für die Polyetherimid-Probe der Fig. 2 gemessen worden ist.

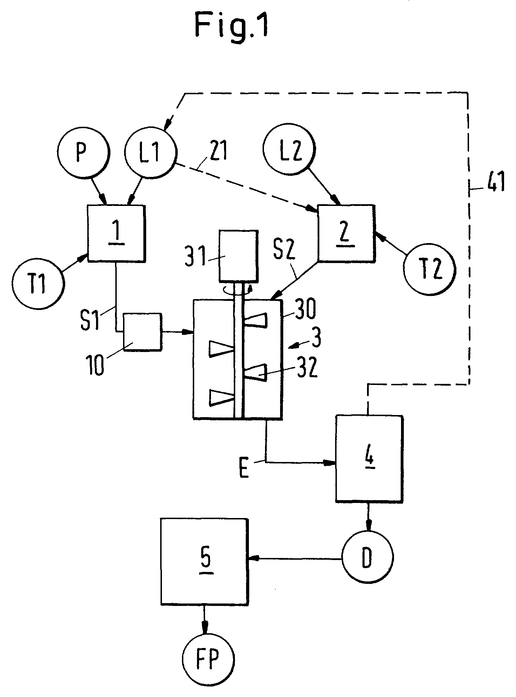

Die in Fig. 1 schematisch dargestellte Anlage umfasst diverse Komponenten 1, 2, 3, 4 und 5, mit denen das erfindungsgemässe Verfahren durchführbar ist. In einem Mischer 1 wird ein Polymer, nämlich Polyetherimid, als festes Polymerisat P einer ersten Flüssigkeit L1 (z. B. Methylenchlorid CH₂Cl₂) zugemischt und in dieser gelöst. Der dabei gewonnenen Lösung S1 kann zusätzlich ein erstes Tensid T1 zugemischt werden. Es ist ein zweiter Mischer 2 vorgesehen, in dem eine zweite Flüssigkeit L2 (z. B. Wasser) mit einem zweiten Tensid T2 vermischt werden kann, wobei eine Lösung S2 entsteht.

In einer Einrichtung 3 wird die Lösung S1 mittels eines Einspeiseorgans 10 in die Lösung S2 eingespeist und in dieser emulgiert. Die Emulgiereinrichtung 3 ist ein Gefäss 30 mit einem Rührwerk, das einen Antrieb 31 und einen Rotor 32 umfasst. Das Gefäss 30 kann auch Statorelemente enthalten, die nicht dargestellt sind. In der durch die Komponenten 1 bis 3 gebildeten ersten Stufe wird eine Emulsion E gebildet, die aufgrund der Tenside T1 und T2, welche die Funktion von Emulsionshilfsmitteln haben, weitgehend stabil ist, so dass Tröpfchen der Emulsion E nicht koaleszieren. Das Polymer P ist in der zweiten Flüssigkeit L2 nicht lösbar. Die erste Flüssigkeit L1 hat einen tieferen Siedepunkt als die zweite (z. B. beträgt der Siedepunkt von Methylenchlorid 42°C); und die erste Flüssigkeit L1 ist in der zweiten nur beschränkt lösbar, so dass das Polymer P in den beim Emulgieren entstandenen Tröpfchen gelöst bleibt. Unter dem Einfluss des Rotors 32 sowie gegebenenfalls eines Stators und durch diese bewirkte Scherkräfte werden Tröpfchen erzeugt, deren mittlerer Durchmesser dem Zweck der zu bildenden Polymerpartikel (Herstellung von Pulverlacken oder Faserverbundwerkstoffen) entsprechen muss. Dies gelingt mit einer Drehzahl von 6000 Umdrehungen pro Minute (= rpm), die mit einem Hochgeschwindigkeitsrührwerk realisierbar ist. Für die Herstellung eines Faserverbundwerkstoffs, bei der Stränge von Endlosfasern mittels einer Druckimprägnierung behandelt werden (vgl. z. B. die DE-A 41 21 915), soll der mittlere Durchmesser der Polymerpartikel nicht grösser oder nicht wesentlich grösser als der Faserdurchmesser sein.

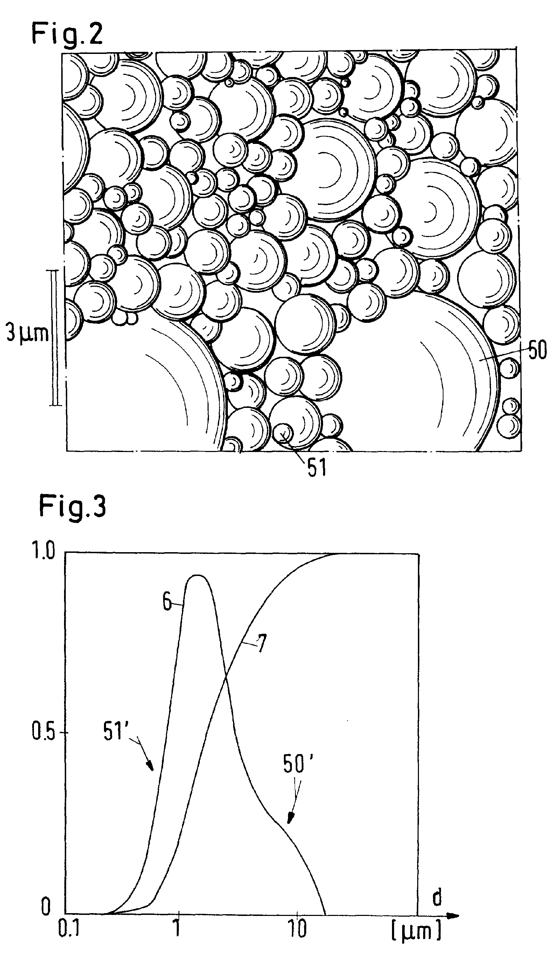

Die Emulsion E wird zur Durchführung der zweiten Verfahrensstufe in eine Abdampfeinrichtung 4 eingespeist, in der die erste Flüssigkeit L1 aus den Tröpfchen abdestilliert wird, wobei auch ein Teil der Flüssigkeit L2 mitverdampft wird. Das in der Flüssigkeit L1 gelöste Polymer P fällt dabei aus und verfestigt sich zu sphäroiden Partikeln 50, 51 (siehe Fig. 2). Die Polymerpartikel 50, 51 bilden mit der verbliebenen Flüssigkeit L2 eine Dispersion D. Die abgedampfte Flüssigkeit L1 wird mit Vorteil rezykliert, was in Fig. 1 durch die gestrichelte Verbindungslinie 41 angedeutet ist.

In einer dritten Verfahrensstufe - ausgeführt in der Anlagenkomponente 5 - kann aus der Dispersion D durch Filtrieren, Waschen und Trocknen ein Pulver, nämlich ein Feinpulver FP, erzeugt werden. Zum Filtrieren kann beispielsweise ein Druckfilter verwendet werden. Das Waschen wird mit Vorteil mehrfach durchgeführt.

Ist die erste Flüssigkeit L1 teilweise in der zweiten Flüssigkeit L2 lösbar, so wird mit Vorteil im Mischer 2 zusätzlich eine Menge an erster Flüssigkeit L1 zugemischt (Verbindung 21) und in der Flüssigkeit L2 gelöst, wobei insbesondere eine maximale Menge der ersten Flüssigkeit L1 verwendet wird, um eine gesättigte Lösung zu erhalten.

Das in Fig. 2 dargestellte Feinpulver PF von Polyetherimid, das nach einer rasterelektronenmikroskopischen Aufnahme vereinfacht gezeichnet worden ist, besteht aus kugelartigen Körperchen, grossen Körperchen 50 und kleinen Körperchen 51. Diese sphäroiden Polymerpartikel 51, 52 zeichnen sich durch homogen strukturierte, porenfreie Oberflächen aus. Partikel anderer Feinpulver, die durch Mahlen gewonnen worden sind, weisen wesentlich anders strukturierte Oberflächen auf: eine irregulär geformte, ebenfalls nichtporöse Oberflächenstruktur (z. B. Polyphenylsulfid-Fortron) oder eine stark poröse Oberflächenstruktur (z. B. Polyamidpulver). Fig. 3 zeigt die Grössenverteilung der Polymerpartikel, welche für die Polyetherimid-Probe der Fig. 2 mittels einer Teilchengrössenanalyse (Sedimentationszelle) gemessen worden ist und die eine auf das Volumen bezogene Verteilung der Partikeldurchmesser d darstellt. Die Kurve 6 gibt die Dichteverteilung an, die Kurve 7 die Summenverteilung. Mit den Pfeilen 50' und 51' sind die Bereiche der Kurve 6 markiert, welche die Dichteverteilung der grossen bzw. kleinen Partikel 50, 51 angegeben. Der mittlere Durchmesser hat einen Wert von 1.7 µm (gemessen als Median 50 - Wert, d₅₀).

Ausser mit dem Polymer Polyetherimid lässt sich das erfindungsgemässe Verfahren auch mit Polycarbonat, Polyamid-imid, Polyethylenterephthalat oder einem Gemisch dieser Stoffe durchführen. Feinpulver aus einem der genannten Polymere sind durch sphäroide Polymerpartikel gekennzeichnet, die einen mittleren Durchmesser von 0.5 bis 100 µm aufweisen. Der Definition des mittleren Durchmessers ist dabei die anhand der Fig. 3 illustrierte Volumenverteilung zugrunde gelegt. Für die Herstellung von Faserverbundwerkstoffen sind mittlere Durchmesser kleiner als 10 µm vorteilhaft.

Das in Fig. 2 dargestellte Feinpulver FP ist mit folgenden zwei Lösungen S1 und S2 erzeugt worden:
Lösung S1: 20 g Polyetherimid (Ultem™) und 1 g Triton X-100 in 100 ml Methylenchlorid.
Lösung S2: 5 g Natriumdodecylsulfat in 300 ml mit Methylenchlorid gesättigtem Wasser.

Die verwendeten Tenside T1 und T2 (Triton™ X-100 bzw. Natriumdodecylsulfat) sind jeweils in der ersten Flüssigkeit L1 (Methylenchlorid) bzw. in der zweiten Flüssigkeit L2 (Wasser) löslich.

Unter dem Einsatz eines hochtourigen Rührers (ca. 6000 rpm) wird die Lösung S1 relativ langsam - während rund 30 s - zur Lösung S2 gegeben und während weiteren 60 s emulgiert. Es entsteht eine milchige Emulsion. Aus dieser wird das Methylenchlorid beispielsweise unter Anlegen von Vakuum in einem Rotationsverdampfer abdestilliert. (Es besteht auch die Möglichkeit, einen Fallfilmverdampfer zu verwenden.) Das Polymerpulver wird durch Filtrieren isoliert, wobei mit Vorteil ein Druckfilter eingesetzt und das Filtrat mit Wasser mehrmals gewaschen wird. Schliesslich wird das gewaschene Filtrat getrocknet, wobei das Feinpulver FP entsteht.

Für die Herstellung eines Faserverbundwerkstoffs wird das Feinpulver FP in Wasser redispergiert, beispielsweise nach folgender Rezeptur: 100 g Polyetherimid-Feinpulver FP, 1 g Cremophor™ A 25 (ein Tensid) und 1000 ml Wasser.

Für das Emulgieren, das in der ersten Stufe des erfindungsgemässen Verfahrens durchgeführt wird, gilt allgemeiner folgendes: In die gerührte zweite Flüssigkeit L2 (oder die Lösung S2) wird die Polymerlösung S1 relativ langsam - auf die Rührzeit bezogen langsam - und insbesondere während des ersten Drittels der Rührzeit zugegeben. Für die Rührzeit ist eine Dauer im Bereich zwischen 30 s und 300 s, vorzugsweise maximal 60 s vorgesehen. Unter dem Einfluss der vom Rührer bewirkten Scherkräfte werden Tröpfchen erzeugt, deren mittlerer Durchmesser vorzugsweise kleiner als 0,03 mm ist.

Es ist möglich, aus Polyetherimid und Methylenchlorid eine Polymerlösung S1 herzustellen, deren Polymeranteil 30 Gew% beträgt. Mit zunehmendem Polymeranteil nimmt die Viskosität zu. Damit sich eine Emulsion mit sehr kleinen Tröpfchen ausbildet, darf sich die Viskosität der Lösung S1 nicht wesentlich von jener der Lösung S2 unterscheiden. Andererseits soll möglichst viel Polymer in der ersten Flüssigkeit L1 gelöst werden, damit eine grosse Menge an Feinpulver mit einer kleinen Menge an Lösungsmittel L1 herstellbar ist. Aus einer Versuchsreihe ist hervorgegangen, dass der Anteil an Polyetherimid in der Methylenchloridlösung S1 vorzugsweise ungefähr 20 Gew% beträgt.

Das Emulgieren kann auch mit anderen mechanischen Mitteln als einem hochtourigen Rührer durchgeführt werden (bei einer Drehzahl von rund 5000 bis 7000 rpm und chargenweise jeweils mindestens 1 Liter Emulsion erzeugend). Beispielsweise ist folgende Möglichkeit denkbar: Durch eine Vielzahl von feinen Düsen wird die Polymerlösung S1 in eine strömende Lösung S2 in Form von dünnen Strömungsfäden eingespritzt; das Gemisch wird unmittelbar nach dem Einspritzen durch statische Mischer geführt, in denen die Strömungsfäden der Polymerlösung S1 in Tröpfchen zerfallen.

Die Dispersion D kann direkt zur Herstellung eines unidirektional faserverstärkten Thermoplasten verwendet werden, wobei dieser Faserverbundwerkstoff mittels einer Druckimprägnierung von aus Endlosfasern gebildeten Strängen hergestellt wird und der mittlere Durchmesser der Polymerpartikel 50, 51 kleiner als der Faserdurchmesser ist.

## Patentansprüche

1. Verfahren zur Bildung eines feinteiligen Polymerisats in Form einer Dispersion (D) von Partikeln (50, 51), zwecks Herstellung von Pulverlacken oder Faserverbundwerkstoffen, bei welchem Verfahren in einer ersten Stufe eine Lösung (S1) eines Polymers (P), das in einer ersten Flüssigkeit (L1) gelöst ist, in einer zweiten Flüssigkeit (L2) emulgiert wird, wobei das Polymer in der zweiten Flüssigkeit nicht lösbar ist, die erste Flüssigkeit einen tieferen Siedepunkt als die zweite hat sowie in der zweiten nur beschränkt lösbar ist, so dass das Polymer beim Emuglieren in dabei entstehenden Tröpfchen gelöst bleibt, und wobei unter dem Einfluss von mechanischen Mitteln (32) und durch diese bewirkte Scherkräfte Tröpfchen erzeugt werden, deren mittlerer Durchmesser (d) einem der genannten Anwendungszwecke entspricht und vorzugsweise kleiner als 0,03 mm ist,
und in einer zweiten Stufe unter Aufrechterhaltung der Emulsion (E) die erste Flüssigkeit destillativ aus dem Gemisch entfernt wird, so dass sich das Polymer in Form von Partikeln, insbesondere sphäroiden Polymerpartikeln verfestigt.

2. Verfahren nach Anspruch 1, **dadurch gekennzeichnet, dass** aus der Dispersion (D) durch Filtrieren, Waschen und Trocknen ein Pulver (FP) erzeugt wird, wobei für das Filtrieren beispielsweise ein Druckfilter verwendet wird und das Waschen mit Vorteil mehrfach durchgeführt wird.

3. Verfahren nach Anspruch 1 oder 2, **dadurch gekennzeichnet, dass** Emulsionshilfsmittel, insbesondere als Emulsionshilfsmittel verwendbare Tenside (T1, T2) der ersten (L1) und/oder zweiten Flüssigkeit (L2) vor dem Emulgieren zugemischt werden.

4. Verfahren nach einem der Ansprüche 1 bis 3, **dadurch gekennzeichnet, dass** in der zweiten Flüssigkeit (L2) eine Menge an erster Flüssigkeit (L1) gelöst wird und dass insbesondere eine maximale Menge verwendet wird, so dass sich eine gesättigte Lösung (S2) ergibt.

5. Verfahren nach einem der Ansprüche 1 bis 4, **dadurch gekennzeichnet, dass** das Polymer Polyetherimid, Polycarbonat, Polyamid-imid, Polyethylenterephthalat oder ein Gemisch dieser Stoffe ist.

6. Verfahren nach Anspruch 5, **dadurch gekennzeichnet, dass** das Polymer (P) Polyetherimid, die erste Flüssigkeit (L1) Methylenchlorid und die zweite Flüssigkeit (L2) Wasser ist und dass insbesondere Tenside (T1, T2) verwendet werden, die in der ersten bzw. der zweiten Flüssigkeit lösbar sind.

7. Verfahren nach Anspruch 6, **dadurch gekennzeichnet, dass** chargenweise jeweils mindestens 1 Liter Emulsion (E) mit einem Hochgeschwindigkeitsrührwerk (31, 32), insbesondere bei einer Drehzahl von rund 5000 bis 7000 rpm hergestellt wird, dass in die gerührte zweite Flüssigkeit (L2) oder Lösung (S2) die Polymerlösung (S1) relativ langsam, auf die Rührzeit bezogen langsam und insbesondere während des ersten Drittels der Rührzeit, zugegeben wird und dass für die Rührzeit eine Dauer im Bereich zwischen 30 s und 300 s, vorzugsweise maximal 60 s vorgesehen wird.

8. Verfahren nach Anspruch 6 oder 7, **dadurch gekennzeichnet, dass** für die Polymerlösung (S1) ein Anteil an Polyetherimid (P) gewählt wird, der weniger als 30 Gew%, vorzugsweise ungefähr gleich 20 Gew% beträgt, und dass die destillative Entfernen des Methylenchlorids (L1) in einem Rotations- oder Fallfilmverdampfer durch Absaugen der Dampfphase durchgeführt wird.

9. Feinpulver (FP) aus einem Polymer (P), insbesondere Polyetherimid, **gekennzeichnet durch** sphäroide Polymerpartikel (50, 51), denen sich ein mittlerer Durchmesser von 0.5 bis 100 µm, vorzugsweise kleiner als 10 µm zuordnen lässt, wobei der Definition des mittleren Durchmessers eine Volumenverteilung zugrunde gelegt wird.

10. Verwendung einer Dispersion (D), die mit dem Verfahren gemäss einem der Ansprüche 1 bis 8 oder einem Feinpulver (FP) gemäss Anspruch 9 und Redispergieren gewonnen worden ist, zur Herstellung eines Faserverbundwerkstoffs mittels einer Druckimprägnierung von aus Endlosfasern gebildeten Strängen, wobei der mittlere Durchmesser der Polymerpartikel (50, 51) kleiner als der Faserdurchmesser ist.
